# EUROPEAN PATENT APPLICATION

(11) **EP 1 912 116 A2**
(43) Date of publication of application: **16.04.2008**
(21) Application number: 07252118.0
(22) Date of filing: 23.05.2007
(51) Int. Cl.: G06F 3/06

(54) **System and method for migration of CDP journal data between storage subsystems**

(30) Priority: 10.10.2006 US 545939
(71) Applicant: Hitachi, Ltd., Chiyoda-ku Tokyo 100-8220 (JP)
(72) Inventor: Kano, Yoshiki c/o Hitachi, Ltd., Chiyoda-ku, Tokyo 100-8220 (JP)
(74) Representative: Hodsdon, Stephen James

(57) **Abstract**

Methods and systems that enable migration of CDP volumes without the need to take the system offline and without losing continuity of data protection. Primary, journal, and baseline volumes are defined in the target storage subsystem and are paired with the corresponding volumes in the source storage subsystem. Various sequence of operations enable transferring the data from the source CDP volumes to the target CDP volumes without losing continuity of usage and protection.

## Description

The present invention relates to migration of computer storage systems and, in particular, to migration of Continuous Data Protection (CDP) volumes.

Historically, various methods have been used to prevent loss of data in a data storage volume. A typical and conventional method (sometimes referred to as "snap shot" method) is to periodically make a backup of data (e.g. once a day) to a backup media (e.g. magnetic tapes). When the data needs to be restored, the data saved in the backup media is read and written to a new volume. However, the above method can only restore the image of the data at the point in time when the backup was taken. Therefore, if the data needs to be recovered, e.g., due to a disk failure, it can only be recovered up to the last backup point, which may be different from the point in time of the disk failure. Consequently, not all of the data can be recovered. Therefore, the system of continuous data protection (CDP) has been developed to enable recovery to any desired moment in time. Under the Storage Networking Industry Association's definition, CDP means that "every write" is being is captured and backed-up. This enables true recovery to any point in time with very fine granularity of restorable objects. Note that in this respect, "write" means any I/O command, whether writing or deleting.

State of the art CDP systems maintain three volumes: primary volume, baseline volume, and journal volume. The primary volume stores all data as it is received, and this data is continuously backed up using the baseline and journal volumes. The baseline volume is a point in time ("snap shot") image of the data that is stored in the primary volume. The journal volume maintains track of all data changes made from the point in time of image that is in the baseline volume. Each entry in the journal volume includes a time stamp in the header. When the data needs to be restored up to a specified time, the journal volume is used to update the baseline volume up to the specified time. To make such operation efficient, the journal volume is a sequential storage system, so that once a specified time is indicated, every item that is stored before that specified time is used to update the baseline volume.

It should be appreciated that the journal volume has only a finite storage area. Therefore, a high watermark is provided to indicate when the journal volume reaches its capacity. At that time, the oldest entries are used to update the baseline volume, up to a low water mark indication. This clears memory area on the journal volume and creates a new "updated" point in time image on the baseline volume. Further information about CDP can be found in U.S. Published Application No. 2004/0268067, which is incorporated herein by reference in its entirety.

At various points in time, data, including backup data, is sought to be migrated to another system, e.g., due to low storage area in the old system, due to acquisition of updated hardware, etc. Under the traditional backup methods, since the backup is done only at a particular point in time, there is a relatively large window of time during which the backup volume can be migrated to the new hardware. Once the previous snap shot is migrated to the new hardware, the next snap shot can be stored on the new hardware and the old hardware can be taken out of service. However, as can be understood, since under the CDP method every write is being backed up, there is no window of time during which the backup volumes can be migrated, unless the whole system is taken off of service.

Therefore, what is needed is a technology providing a way to migrate the primary, baseline, and journal volumes of a CDP system without the need to take the system offline and without losing continuity of data protection, i.e., the migration is made while the system remains online.

Aspects of the present invention are directed to methods and systems that preferably enable migration of CDP volumes without the need to take the system offline and without losing continuity of data protection. Data may be sought to be migrated to another system for various reasons, such as, for example, due to low storage area in the old system, due to acquisition of updated hardware; etc. Therefore, once the data is migrated from the source storage subsystem to the target storage subsystem, the source storage subsystem's volumes may be released. Releasing the source storage may include returning the resources to the free resource pool so that they may be used for other purposes, physically disconnecting the resource from the host, etc. The end result of the process is preferably that the host does not use the target storage subsystem for the CDP, and the resources of the source storage do not participate in the CDP after the migration.

In accordance with an aspect of the invention, a method for migrating continuous data protection (CDP) volumes from a source storage subsystem to a target storage subsystem coupled to a host is provided, wherein the CDP volumes comprise a source primary volume, a source baseline volume, and a source journal volume, the method comprises the sequential steps of:
- a.: defining a target primary volume, a target baseline volume, and a target journal volume in the target storage subsystem, and pairing the target primary volume, target baseline volume, and target journal volume with the source primary volume, source baseline volume, and source journal volume, respectively;
- b.: performing a sync operation on the pairing of target primary volume and source primary volume, target baseline volume and source baseline volume, and target journal volume source journal volume;
- c.: performing a split operation of the source storage subsystem and target storage subsystem by:
i. suspending host I/O at the source subsystem's port;
ii. activating host I/O at the target storage subsystem; and
- d.: deleting the pairing of target primary volume and source primary volume, target baseline volume and source baseline volume, and target journal volume and source journal volume.

In accordance with another aspect of the invention, there is a method for migrating continuous data protection (CDP) volumes from a source storage subsystem to a target storage subsystem coupled to a host, wherein the CDP volumes comprise a source primary volume, a source baseline volume, and a source journal volume, the method comprises the sequential steps of:
- a.: defining a target primary volume, a target baseline volume, and a target journal volume in said target storage subsystem, and pairing the target primary volume, target baseline volume, and target journal volume with the source primary volume, source baseline volume, and source journal volume, respectively;
- b.: performing a sync operation on the pairing of target primary volume and source primary volume;
- c.: noting a last sequence number recorded in the source journal volume and from that point forward, directing all host I/O to target storage subsystem by performing host I/O requests on the target primary volume and recording journal entries of the host I/O requests on the target journal volume;
- d.: Asynchronously copying the source baseline volume onto the target baseline volume
- e.: Asynchronously copying the source journal volume onto the target journal volume to thereby define an old journal in said target journal volume;
- f.: deleting the pairing of target primary volume and source primary volume, target baseline volume and source baseline volume, and target journal volume and source journal volume.

In accordance with yet another aspect of the invention, there is provided a method for migrating continuous data protection (CDP) volumes from a source storage subsystem to a target storage subsystem coupled to a host, wherein the CDP volumes comprise a source primary volume, a source baseline volume, and a source journal volume, the method comprising the sequential steps:
- a.: defining a target primary volume, a target baseline volume, and new journal volume in the target storage subsystem, and pairing the target primary volume, target baseline volume, and new journal volume with the source primary volume, source baseline volume, and source journal volume, respectively;
- b.: performing a sync operation on the pairing of target primary volume and source primary volume;
- c.: Making a point-in-time image of the target primary volume onto the target baseline volume;
- d.: suspending host I/O requests on the source storage subsystem port;
- e.: activating host I/O requests on the target storage subsystem port;
- f.: monitoring used storage space on the new journal volume and, when the used storage space on the new journal volume exceeds source journal's capacity, providing an indication that the source storage subsystem may be released.

Additional aspects related to the invention will be set forth in part in the description which follows, and in part will be apparent from the description, or may be learned by practice of the invention. Aspects of the invention may be realized and attained by means of the elements and combinations of various elements and aspects particularly pointed out in the following detailed description and the appended claims.

It is to be understood that both the foregoing and the following descriptions are exemplary and explanatory only and are not intended to limit the claimed invention or application thereof in any manner whatsoever.

### BRIEF DESCRIPTION OF THE DRAWINGS

The accompanying drawings, which are incorporated in and constitute a part of this specification exemplify the embodiments of the present invention and, together with the description, serve to explain and illustrate principles of the inventive technique. Specifically:

Fig. 1 provides a high-level generalized block diagram of a physical configuration of a CDP system suitable for migration according to embodiments of the subject invention.

Fig. 2 is a diagram illustrating logical diagram for the software components and their interconnections, for a CDP system suitable for migration according to embodiments of the subject invention.

Fig. 3 depicts an example of listing parity groups in LDEV configuration table.

Fig. 4 shows a mapping table between LU and LDEVs.

Fig. 5 illustrates mapping between target P-VOL and After-JNL related volumes.

Fig. 6 illustrates an example of LDEV total pool table.

Fig. 7 depicts a concept diagram of After-JNL mechanism.

Fig. 8 illustrates procedures of the write command for target LDEV in JNL Manager.

Fig. 9 illustrates an example of a bitmap for each P-VOL.

Fig. 10(A) illustrates an exemplary procedure for updating JNL data to baseline.

Fig. 10 (B) illustrates an exemplary procedure for restoring data to a point-in-time.

Fig. 11 illustrates a pairing table for source and target storage subsystems.

Fig 12(A) illustrates an overview of a configuration for CDP volume migration according to an embodiment of the invention.

Fig 12(B) illustrates an overview of a configuration according to an embodiment of the invention.

Fig. 13 illustrates the operation of configuring operation according to an embodiment of the invention.

Fig. 14 provides an exemplary flowchart of an automatic allocation method.

Fig. 15 illustrates an embodiment for sync and split operation for JNL-VOL and B-VOL.

Fig. 16 illustrates a flow chart of an example for a sync operation procedure.

Fig. 17 shows an exemplary flow chart for JNL Manager changing to write operation instead of normal status.

Fig. 18 illustrates an exemplary flow chart for split operation.

Fig. 19 illustrates an exemplary flow chart for background mirror operation.

Fig. 20 illustrates an overview of the system according to the third embodiment of the invention.

Fig. 21 illustrates an exemplary process for monitoring procedure in the console.

Fig. 22 illustrates a logical configuration of the forth embodiment.

Fig. 23 depicts an external storage mapping table for storage virtualization.

Fig 24 shows the logical configuration for a sixth embodiment of the invention.

Fig. 25 shows device table within a host, created by the OS.

The aforementioned accompanying drawings show by way of illustration, and not by way of limitation, specific embodiments and implementations consistent with principles of the present invention. These implementations are described in sufficient detail to enable those skilled in the art to practice the invention and it is to be understood that other implementations may be utilized and that structural changes and/or substitutions of various elements may be made without departing from the scope and spirit of present invention. The following detailed description is, therefore, not to be construed in a limited sense. Additionally, the various embodiments of the invention as described may be implemented in the form of software running on a general purpose computer, in the form of a specialized hardware, or combination of software and hardware.

Various embodiments of the invention will be described herein to enable migration of CDP volumes without the need to take the system offline and without losing continuity of data protection. The description herein will first address the system's general architecture, and then address CDP volumes migration.

### Physical Configuration

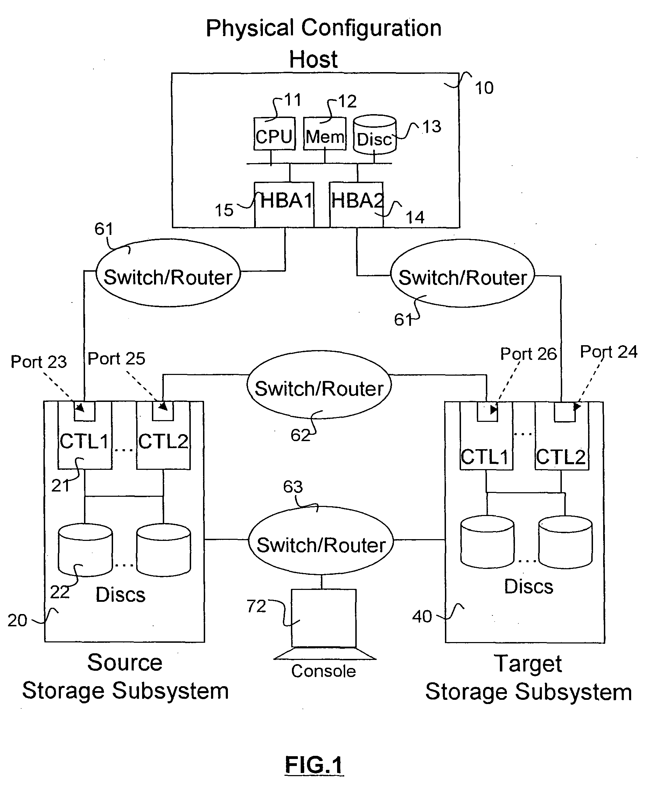

Fig. 1 provides a high-level generalized block diagram of a physical configuration of a CDP system suitable for migration according to embodiments of the subject invention. In Fig. 1, a host system 10 is connected to a source storage subsystem 20 and a target storage subsystem 40. Here, the user wishes to migrate from the source storage subsystem 20 to the target storage subsystem 40, e.g., due to limitation in storage space on the source, due to an upgrade to the target, etc. An aspect of this embodiment of the invention is that it enables performing the migration without interrupting data protection.

Host 10 has Operating System hardware configured for computing, such as a standard workstation or personal computer. The host 10 has CPU 11, memory 12, and internal disc 13. The host also includes Host Bus Adapters (HBA) 14 and 15 to connect to generic fiber channel (FC) switch ,generic Ethernet switch 61 or other kind of switch or routing device. The host 10 stores the data on Logical Unit (LU - not shown) provided by a storage subsystem, originally the source storage subsystem 20, and after migration the target storage subsystem 40.

The Storage Subsystems 20, 40, store data in respective logical units using, e.g., SCSI-2, 3 commands. The storage subsystem may have several RAID controllers (CTL) 21 and several Discs 22. Each controller has processors, memory, NIC like Ethernet, and FC port to SAN (storage area network) or to Discs 22, to process SCSI I/O operations. Each controller generally includes non-volatile random access memory (NVRAM) and can store data to the NVRAM for data cache purposes and protect it, e.g. from a power failure. The controller provides ports, e.g., 23, 25, which have WWN (World Wide Name) to specify the target ID as SCSI word from the host 10, and consist of LUN (logical unit number) on an FC port. The disks 22 may consists of RAID configuration using several hard-drive discs resided in the storage subsystem (Not depicted in the figures).

The storage subsystem has an internal management console (Not depicted) which is connected to the storage subsystem internally and is accessible from the common console, such as general web-based PC or workstation, to manage the storage subsystem. The Storage Administrator console 72 may be located remotely and can be accessible via generic IP protocol transferable switch, like Ethernet hub, switch and IP router 63. The storage Subsystems 20 and 40 are connected by command transferable network switch or router, e.g., generic fibre channel switch, Ethernet Switch, Ethernet hub, or Internet Protocol (IP) Router 61, 62. Communication is done by block level command sets like SCSI (Small Computer System Interface) or ESCON (Enterprise Systems Connection). In this embodiment, we use SCSI as block level command sets and FC switch for the connection.

### Logical Configuration

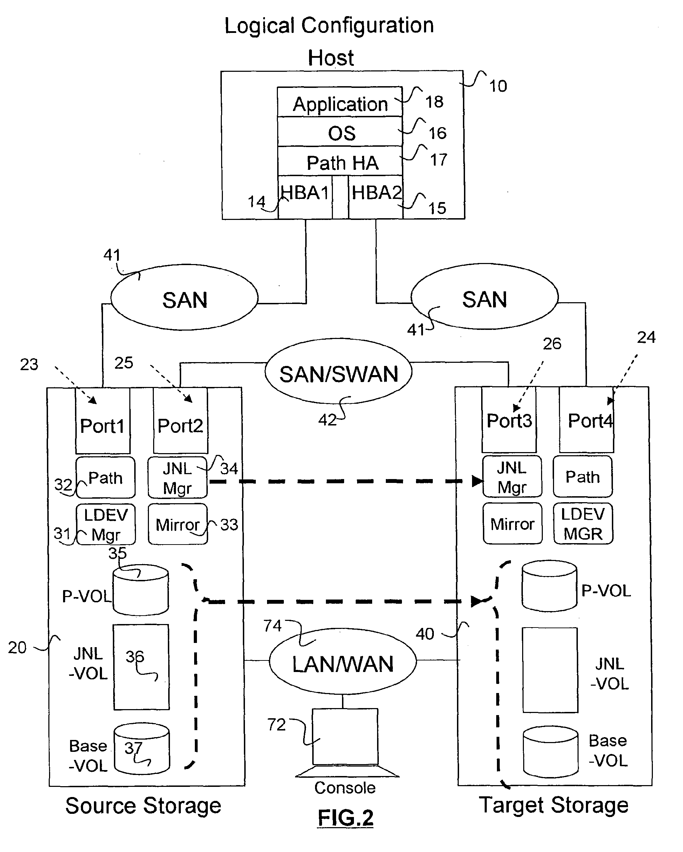

Fig. 2 is a diagram illustrating logical diagram for the software components and their interconnections, for a CDP system suitable for migration according to embodiments of the subject invention. As explained with respect to Fig. 1, the host 10 currently uses CDP source storage 20, which is to be migrated to CDP target storage 40. SAN (Storage Area Network) 41 provides block-access capable logical network connection like SCSI, ESCON or other. In this embodiment, we will use mainly SCSI to explain the embodiment. The SAN 41 provides a logical connection between Host 10 and Source Storage Subsystem 30 via port 23 or between Host 10 and Target Storage Subsystem 40 via port 24, using switch or Hub like FC and Ethernet. This capability is provided mainly by fibre channel switch, hub, Ethernet Switch or hub etc.

The SAN/SWAN (Storage Wide Area Network) 42 provides a logical connection between Source Storage Subsystem 20 via port 25 and Target Storage Subsystem 40 via port 26 using a switch, a hub, e.g., FC and Ethernet or IP router. This capability is provided mainly by fibre channel switch, hub, Ethernet Switch or hub etc. The SAN/SWAN 42 provides block access capable logical network connection like FC-SCSI, SCSI, iSCSI and ESCON. If the source storage subsystem 20 and target storage subsystem 40 are remotely located over a long distance, a channel extender (not shown) may be used to extend the physical network.

The LAN(Local Area Network)/WAN(Wide Area Network) 74 provides Internet Protocol (IP) accessible network. The LAN/WAN 74 provides logical connection between Console 72 and the source and target storage subsystems 20 and 40, using switches such as Ethernet, FDDI, Token ring, etc. The LAN/WAN 74 enables access from other hosts to manage the storage subsystems remotely.

Host 10 consists of OS (operating system) 16, application 18, and Path High Availability (HA) software 17, which provides alternative path capability for the data and SCSI driver to access Logical Unit (LU) on the storage subsystem. The OS 16 may be UNIX, Microsoft Windows, Solaris, Z/OS or AIX. The application 18 may be transaction type application like database or other kind of office application. To control the migration, host 10 may have storage control agent (Not Depicted) operable as an in-band control mechanism. The agent communicates with the storage subsystems using, e.g., a technology which controls the storage device using SCSI command sets, such as that described in European Patent Publication No. EP1246050, which is incorporated herein by reference in its entirety. The agent corresponds to the RMLIB, and the Command Device corresponds to CM as described in EP1246050. The agent provides Application program Interface (API) or Command Line Interface (CLI).

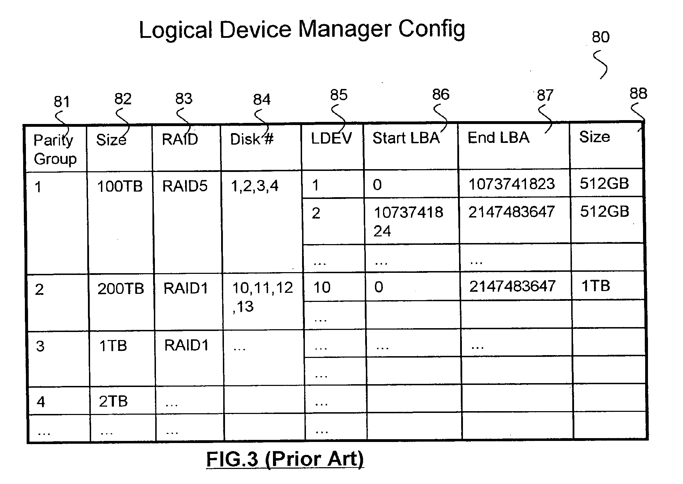

The modules of the storage subsystem are enabled in microcode, which is executed on the controller (CTL) 21 and is provided as a program code installed from optical media, FD, and other removal devices. The microcode consists of parity group manager (not shown), logical device manager (LDEV Mgr) 31, that creates logical device (LDEV) to provide a volume from physical discs to host 10, and Journal (JNL) Manager(Mgr) 34. Each volume has a set of LDEVs, which can be a single LDEV or concatenate LDEVs. The parity group manager module is a part of microcode and consists of a parity group from discs using RAID0/1/2/3/4/5/6 technology. RAID 6 based on RAID 5 technology is dual parity protection. The created parity group is listed in LDEV Config 80 (Fig 3) and has parity group number 81, to identify the parity group within the storage subsystem, usable capacity size 82, created from RAID technology, RAID configuration 83, and the consisted disc number 84.

The LDEV manager 31 manages the LDEV's structure and the behavior from LU's IOs. The LDEV manager 31 presents a set of LDEVs as a volume toward LU to read and write data issued by the host 10. LDEV is a portion of parity group. An administrator defines and initially formats the region of the LDEV adding the number of LDEV. The mapping between LDEV and parity group is stored in LDEV Config 80 (Fig 3). For each parity group number 81, a record in LDEV Config has LDEV number 85, to identify the logical device within the storage subsystem, start Logical Block Address (LBA) 86, to represent LDEV's start address on the parity group, end LBA 87, to present the LDEV's end address on the parity group, and size 88 to present the size of the LDEV.

Mirror manager 33 manages replication of data on volumes between source storage subsystem 20 and target storage subsystem 40. Console 72 provides a capability for administrator to manage the storage subsystem via LAN/WAN 74. The console 72 provides GUI for the creation of LDEV, the mapping of LDEV to Logical Unit (LU), a creation of LDEV pool, the mapping of LDEV to LU, etc.

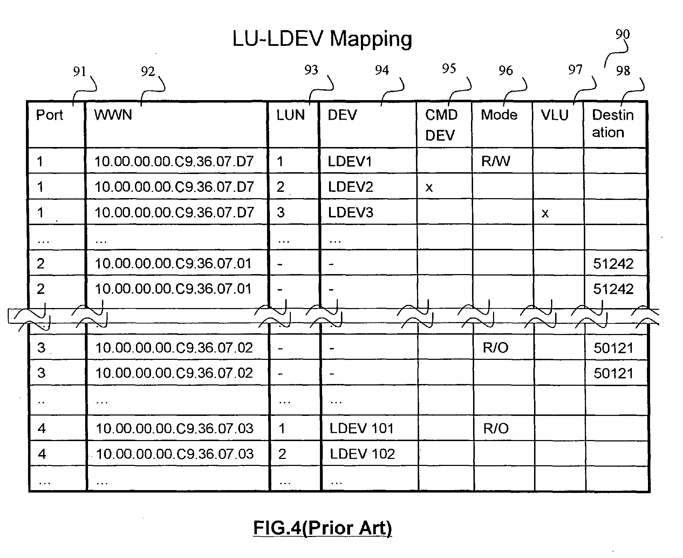

Ports 23, 24, 25, 26 provides LDEV access via logical unit (LU) on a WWN to SAN 41 or SAN/SWAN 42. Fig 4 shows a mapping table between LU and LDEVs. Each value which is in the hardware port 91 column corresponds to one of the ports in Fig 1 or Fig 2. Each port has its own WWN 92 to be specified from the host 10. A plurality of LUs can be assigned on the port. An LU is specified by a set of WWN 92 and LUN 93. The maximum number of LU on a port is indicated by 8 byte based on FCP specifications. Further, each LU is mapped to an LDEV to store data from hosts 10. Based on this mapping information, the controller 21 receives SCSI commands from the port and converts the set of WWN 92 and LUN 93 into the LDEV 94 to access the appropriate LDEVs. Each LU on a port has a state of access mode. This access mode defines how to access LDEV data. The mode for LDEV consists of the following modes. R/W which provides read/write access. R/O which provides read only access and returns an error on write command, and DENY which denies any access and returns an error on write or read command.

Virtual LU is unmapped to any volumes initially on the port. In the case of virtual LU on Storage subsystem, the LU for virtual LU has logical unit number which is one of the parameters in the function call. So the host can access the LU using normal SCSI command. As an example of the response on the SCSI inquiry, the Virtual LU responses normal response considering the LDEV is unmapped. In result of inquiry, the controller returns the size of LDEV 88 on LU. However the LU doesn't have any LDEVs. So, when SCSI Read/Write operation that comes from initiator is executed on Virtual LU, the LU responses error to the initiator. When the administrator creates a virtual LU through the console, JNL Manager on the controller marks an entry of VLU 97 in Fig 4 corresponding to a LUN on a port. When the administrator maps a restore volume, i.e, a journal applied LDEV which is point in time image for user specified time (discuss later), to VLU, the port assigns the LDEV number 94 if there is VLU. Then the Host can access the LDEV through VLU. When the administrator un-maps a restore volume from VLU, the port un-assigns the LDEV number 94 if there is number of restore volume. If a restore volume is mapped to VLU, the inquiry returns the size which is the mapped LDEVs' size. When SCSI Read/Write operation is executed, the volume can be read/write.

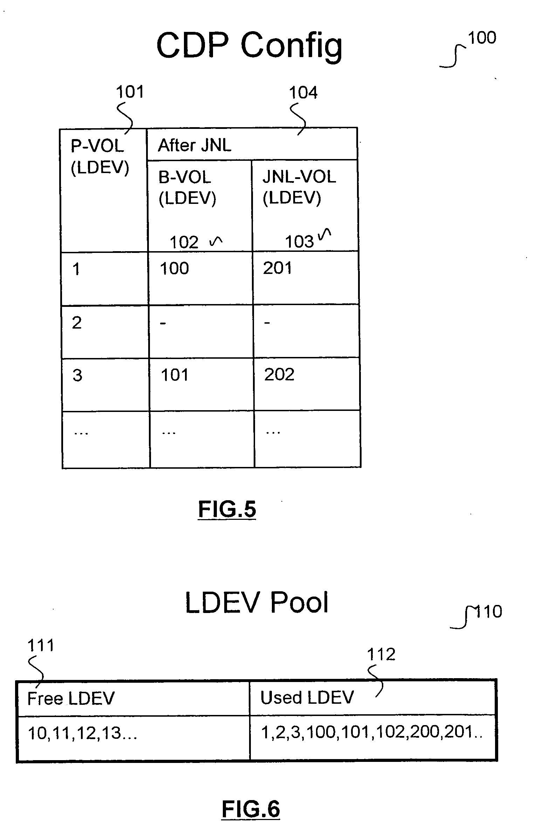

Journal manager (a.k.a. JNL manager, JNL Mgr) 34 manages the After-JNL. In this description, we mainly use After-JNL as CDP journaling method. However, the invention is also applicable to Before-JNL. Before discussing the details of JNL mechanism, we discuss the volume configuration. The mapping between target P-VOL and After-JNL related volumes is depicted in Fig 5 as CDP Config 100. The table consists of target P-VOL's LDEV number 101, the B-VOL's LDEV 102 and the JNL-VOL's LDEV 103. Upon allocation of LDEV, LDEV manager provides LDEV selected from free LDEV of pool table 110, illustrated in Fig 6. The table 110 illustrated in Figure 6 maintains the total pool of resources with indication of which LDEV's are free 111 and which LDEV's are used 112. If the LDEV is allocated to baseline LDEV or JNL LDEV, the LDEV is treated as "used' LDEV 112 in LDEV pool. Upon the allocation, the JNL manager refers the size information from LDEV manager 80 based on LDEV number. Regarding allocation of LDEVs for After-JNL 104, controller 21 may automatically assign LDEVs from free LDEV 111 on LDEV pool (Fig 6).

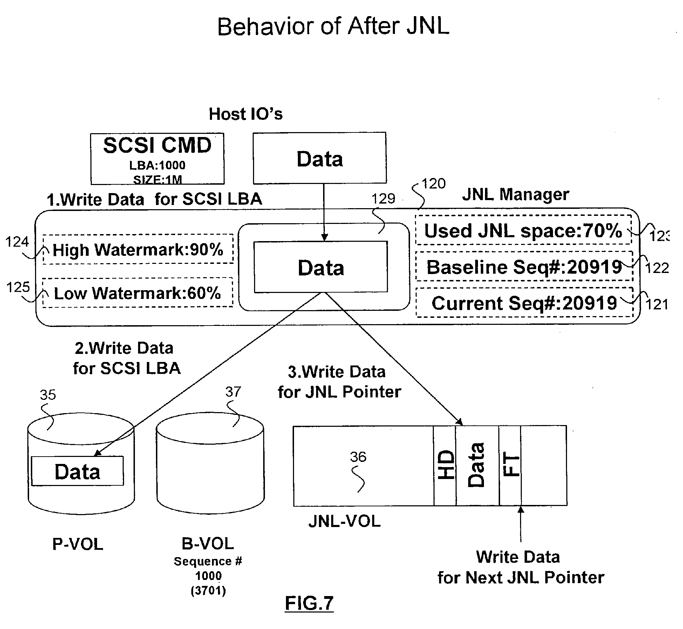

Fig. 7 depicts a conceptual diagram of After-JNL mechanism. The After-JNL mechanism makes a journal of the history of Write IO issued by hosts. In this configuration, there is primary volume (P-VOL) 35, baseline volume (B-VOL) 37, and JNL volume (JNL-VOL) 36. The P-VOL 35 is host accessible volume for CDP. The B-VOL 37 has a point in time ("PIT") "snapshot" of data at the point of starting journaling on JNL-VOL 36, and a sequence number which is counted on each journal operations and leaves the number, 3701, after creation of the PIT copy. JNL-VOL 37 has IO journal for the P-VOL 35 and related CDP information, like sequence number for each journal entry.

The JNL manager 120 has a JNL pointer (a.k.a Current Seq# or current sequence number) 121 to find the current write position on the JNL-VOL's LDEV. The JNL pointer 121 starts from 0 and increments by logical block addresses (LBA). The JNL manager 120 also monitors the amount of used JNL space to protect against overflow of the JNL volume. Storage administrator or storage vendor initially defines a high watermark 124 and low watermark 125 thresholds to de-stage JNL data. The de-stage operation is initiated when the JNL manager 120 detects that used JNL space 123 is over the high threshold 124. The JNL data is then applied to the B-VOL 37, starting from oldest journal, until the low watermark is reached. In this example, the threshold is defined in terms of percentage of used space in the JNL volume. The default value for the high watermark is 80% and for low watermark is 60%. The JNL Manager 120 periodically checks whether the used JNL space 123 is over high watermark 124 or not. The storage administrator may change the value and checking period via console 72.

### Exemplary IO procedures

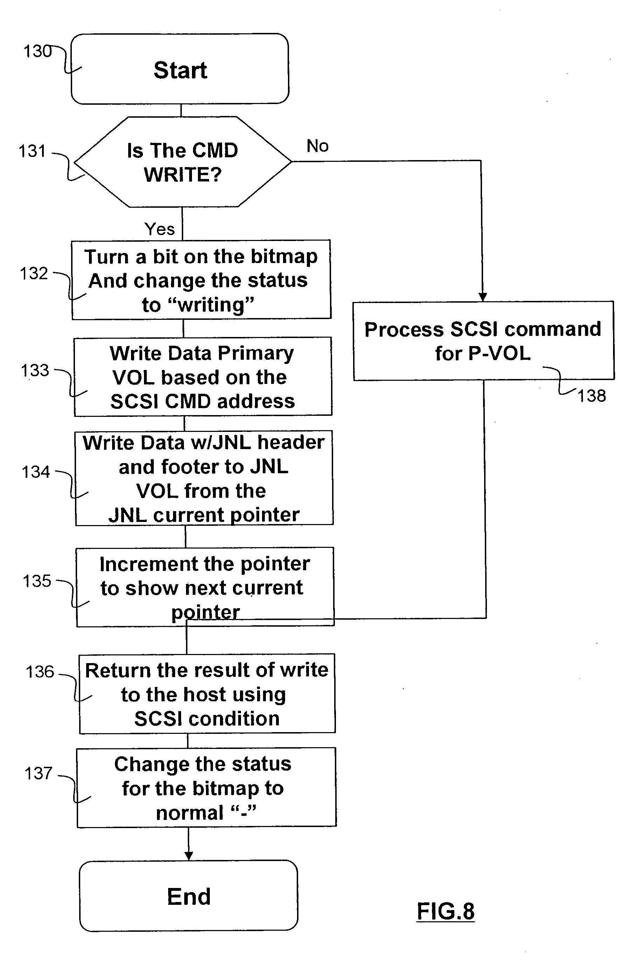

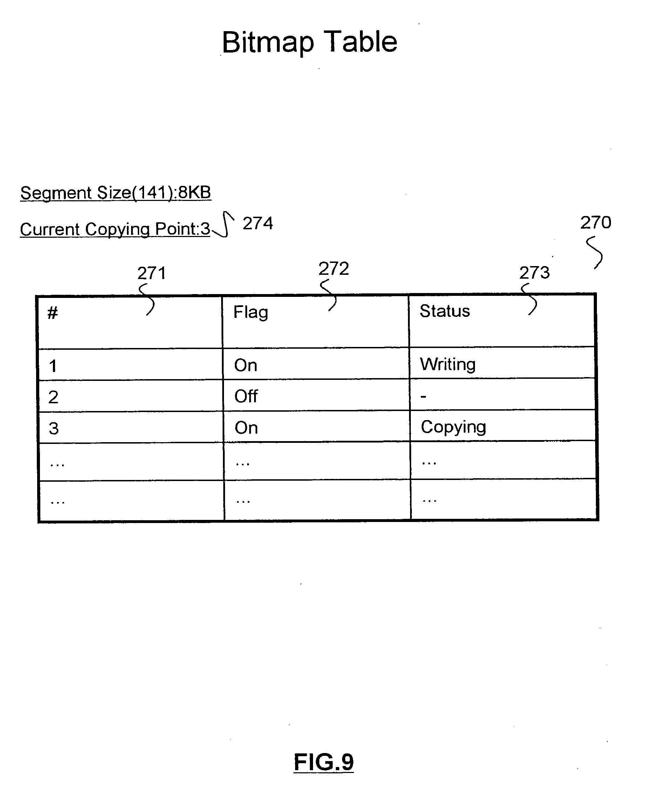

Fig. 8 illustrates procedures of the write command for target LDEV in JNL Manager; while Fig. 9 illustrates an example of a bitmap for each P-VOL. In Step 130 the JNL Manager receives SCSI CMD sent from host (Procedure 1 in Fig 7), and in Step 131 the JNL Manager checks whether the command is SCSI WRITE commands like WRITE 6, WRITE 10, and etc. If the command is WRITE command, the procedure proceeds to Step 132; otherwise the procedure proceeds to Step 138. In Step 132 the JNL Manager turns on a bit flag 272 on appropriate entry 271 on bitmap table (Fig. 9). As shown in Fig. 9, the bitmap table consists of segment size for entry number of bitmap 271, Flag of the bit 272, and status 273 to indicate current operation for bitmap. Especially, in this step, JNL manager leaves the status of "writing" on the status 273 indicated by "writing".

In Step 133 the JNL Manager writes the data directed for the primary volume onto the P-VOL, based on initiator's SCSI command. (Procedure 2 in Fig 7). In step 134 the JNL Manager writes header (HD) information, data, and footer (FT) information for the journal starting from JNL Pointer's LBA to JNL volume 36 (Procedure 3 in Fig 7). In Step 135 the JNL Manager increases by total size of header, data, and footer to the pointer and calculates used JNL space on JNL volume. In Step 136 the JNL Manager returns the result of write to the host using SCSI condition state, and in Step 137 the JNL Manager changes the status from "writing" to "-". Note that if in step 131 the CMD is not a WRITE command, then in Step 138 the JNL Manager executes other SCSI command like READ 6 operation on Primary LDEV.

With respect to the JNL write data, the header/footer information includes header/footer bit, sequence # to identify IO within system, command type for header/footer to show what type of header/footer it is, e.g., journal data, marker and etc., the time when JNL Manager received the IO in JNL Manager, SCSI command which is received from the host, start address and size for the journal data, and header sequence number if the information is footer. The sequence number is incremented by each header/footer insertion. If the sequence number is above the preset maximum number, the number may return to 0. According to one example, the size of the header/footer information is 2KB, which is 4 by LBA in this example. The size of header/footer may be extended in order to enable more capabilities.

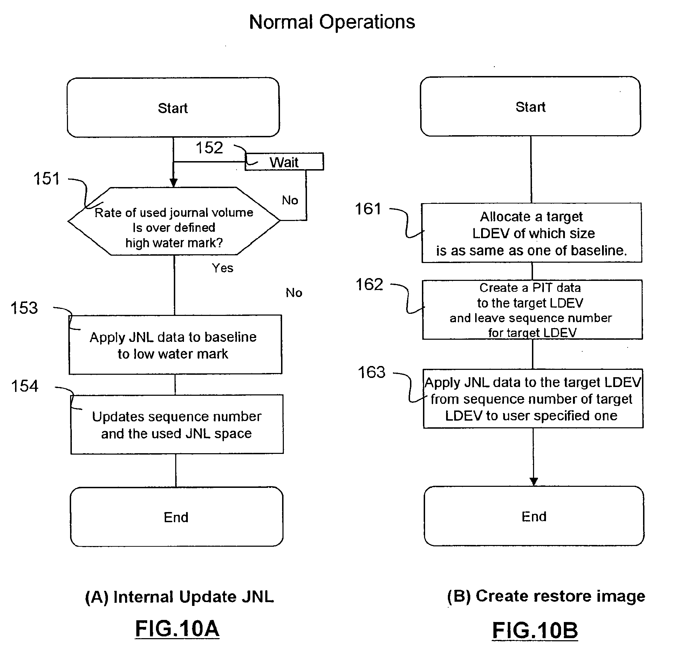

Regarding restore operation from Host 10's CLI or console 72's GUI, the storage subsystem creates a restore volume specified by sequence number or time, and maps the restore volume to Virtual LU or normal LU. Before map operation, JNL Manager checks if the Virtual LU or normal LU maps another restore volume, which journal is applied to LDEV or not. If another restore volume has been mapped on the Virtual LU or normal LU and Read/Write access has been executed within last 1 minute, this operation is skipped as the Virtual LU or normal LU is used. If not, the restore volume is unmapped and returns the restore volume's LDEVs to free in LDEV pool. The term of checking IO operation for Virtual LU which is 1 minute is an example in this embodiment. In case of restore data, when storage administrator requests a point-in-time of volume on journal using sequence number or time, JNL Manager provides a restore volume which applies JNL data to the B-VOL, considering size change. Fig 10 (B) illustrates an exemplary procedure for restoring data to a point-in-time. In Step 161 the JNL manager allocates a restore volume from LDEV pool. The size of the target LDEV is the same as one of the B-VOL's. In Step 162 the JNL manager creates a point-in-time (PIT) data to the target LDEV and leaves the sequence number for it. In Step 163 the JNL manager applies JNL data to the target LDEV from the sequence number of the target LDEV to the user specified sequence number. If the user specified sequence number is time, JNL Manager picks the sequence number from the JNL entry corresponding to the specified time. The JNL Manager also leaves the latest sequence number for restore volume after applying the JNL. The JNL Manager may map the restore volume through virtual LU specifying LDEV number 94 (Fig 4).

In case of updating JNL data to the baseline volume, when the JNL Manager de-stages JNL data on the JNL volume to the baseline volume, the JNL Manager may processes the procedure in Fig 10(A). The detail of an exemplary procedure is as follows. In Step 151 the JNL Manager checks whether the rate of used JNL space 123 is over the high watermark 124 or not. If the rate is over it, then the procedure goes to Step 153; otherwise the procedure loops back through Step 152, where the JNL Manager waits for next checking time by pre-defined time period. In Step 153 the JNL Manager applies JNL data to the B-VOL from current sequence number to low watermarks sequence number. In Step 154 the JNL Manager updates the sequence number for the B-VOL and the rate of used JNL space on JNL-VOL, ignoring the de-staged data.

### Examples of Data Migration

### First Embodiment

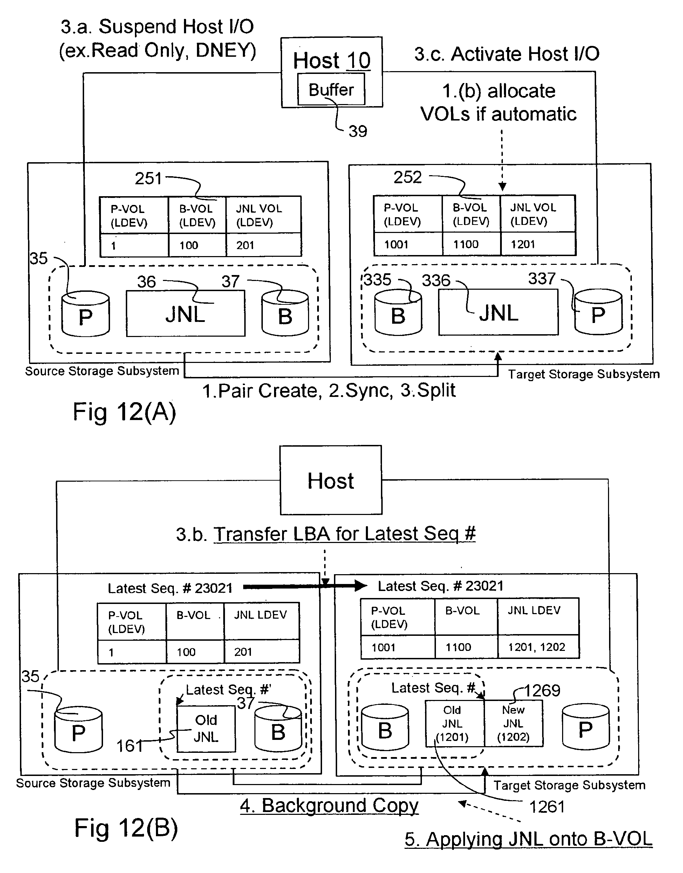

Fig 12(A) illustrates an overview of a configuration for CDP volume migration according to an embodiment of the invention. The source storage subsystem provides P-VOL 35, JNL-VOL 36, and B-VOL 37. The target storage subsystem provides P-VOL 335, JNL-VOL 336, and B-VOL 337. CDP Config 251 on source storage subsystem and 252 on target storage subsystem define addresses for each volume. The Host 10 can see the P-VOL on source storage subsystem and the P-VOL as a LU on target storage subsystem. The following illustrates the behavior of the system according to the first embodiment, which consists the following operations.

### 1. Path Configuration

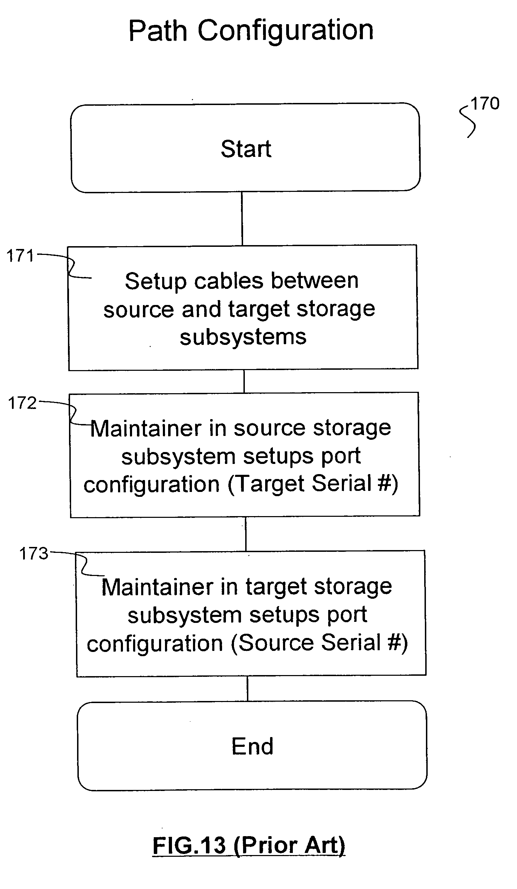

The Storage subsystems need to configure the connection to each other. Fig. 13 illustrates the operation of configuring operation according to an embodiment of the invention. When the procedure starts at step 170, it proceeds to step 171 wherein the maintainer of the storage subsystems sets up fibre channel cables between the source and target storage subsystems. The fibre channel cable is connected on a port in each storage subsystem. To communicate between each other in SCSI, which needs to have initiator and target concept, the number of connections starts from two. Then additional number of connection may be added to increase the bandwidth. In step 172 the maintainer sets up port configuration in the source storage subsystem from the GUI on console 72. The maintainer specifies the destination's storage subsystem serial number (98 on Fig 4) to identify the storage subsystem for the connection port on the source storage subsystem (port 2 on Fig 4). At step 173 the maintainer sets up port configuration in target storage subsystem from the GUI on console 72. The maintainer specifies the destination's storage subsystem serial number (98 on Fig 4) to identify the storage subsystem for the connection port on target storage subsystem (port 3 on Fig 4). The procedure then ends.

### 2. Pair Creation Operation

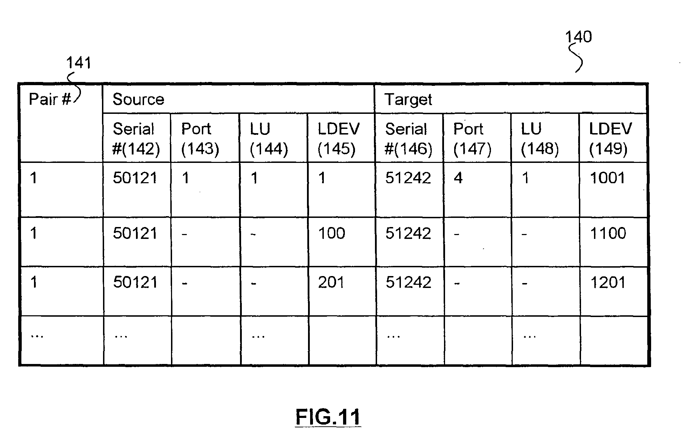

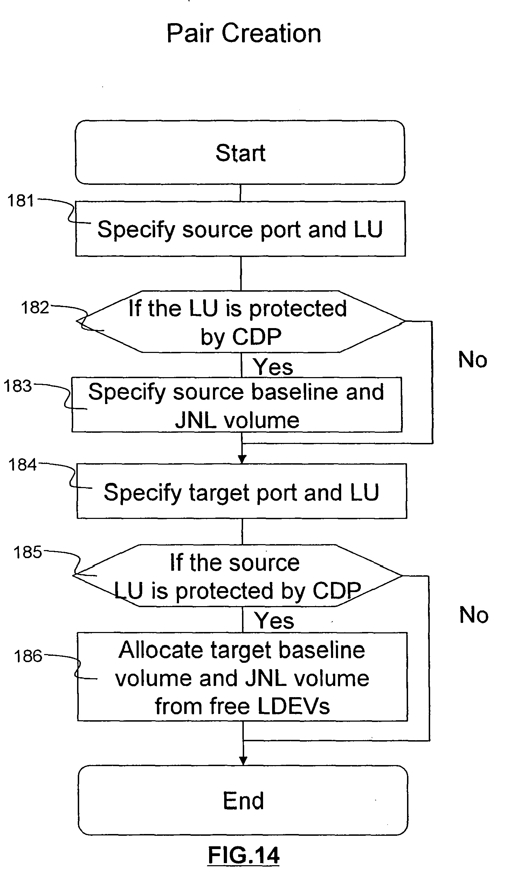

Pair creation operation creates a volume pair between source and target P-VOL on storage subsystems. The storage administrator manages this operation from Console 72, inputting the address of volume for P-VOL's LU in Pair Table (Fig 11). The pair table consists of pair number 141, source storage subsystem's Serial Number 142, Port 143, LU number 144, LDEV number 145, and also target storage subsystem's Serial Number 146, and target port 147, LU number 148, and LDEV number 149. Regarding LDEV number in source storage system, Mirror manager refers the number 94 from table 90 in Fig.4. Regarding LDEV number 145 in source storage subsystem, the administrator may insert the number inserted by source P-VOL's LUN; LUN has already been assigned with LDEV, The microcode can refer the mapping from administrator specified LUN to LDEV based on LU-LDEV mapping table. However, as an automatic method in target storage subsystem, Mirror manager may allocate LDEV from free LDEV pool on target storage subsystem; considering automatic allocation method, the procedure is following (Fig. 14). In step 181 the storage or system administrator specifies source port and LU to migrate data on console 72 or CLI I/F on host 10 toward source storage subsystem. The Mirror manager stores the setting information which is source storage subsystem's Serial Number 142, Port 143, and LU number 144. Regarding the LDEV number 145, the Mirror manager retrieves the number from table 90 in Fig.4. At step 182 the Mirror manager in the source storage subsystem checks whether the LDEV specified by the administrator is protected by CDP or not. The Mirror manager checks LU's LDEV number from 93 and 94 in Fig 4, and then checks existence of entries CDP Config. If there is CDP protection for LDEV, the procedure goes to Step 183. If there is no CDP, the procedure goes to Step 184. At step 183 the Mirror manager in source storage subsystem also includes CDP's B-VOL and JNL-VOL to migrate data. At step 184 the storage or system administrator specifies target port and LU to migrate data to on console 72 or CLI I/F on host 10 in target storage system. At step 185 the Mirror manager in the target storage subsystem checks whether the source LDEV specified by the administrator is protected by CDP or not. The Mirror manager in the target storage subsystem communicates with the Mirror manager in the source storage subsystem using communication links between storage subsystems. If there is CDP protection for the LDEV, the procedure goes to Step 186. If there is no protection, the procedure ends. At step 186 the Mirror manager allocates target B-VOL and JNL-VOL from free LDEV list. Also Mirror manager in target Storage subsystem may allocate Virtual LU 97 from available LDEV 94 of LUs 93 on LU-LDEV mapping table (Figure 4) if the CDP protected LU has set up the Virtual LU. The size of LDEVs is referred from Size 88 in Fig. 3 based on B-VOL and JNL-VOL's LDEV number in source's CDP Config 100. Also, Mirror manager creates pairs for B-VOL and JNL-VOL onto pair list 140 without port number 143, 147 and LU number 144, 148 with serial number LDEV number identified by P-VOL's pair number (141).

### 3. Sync Operation

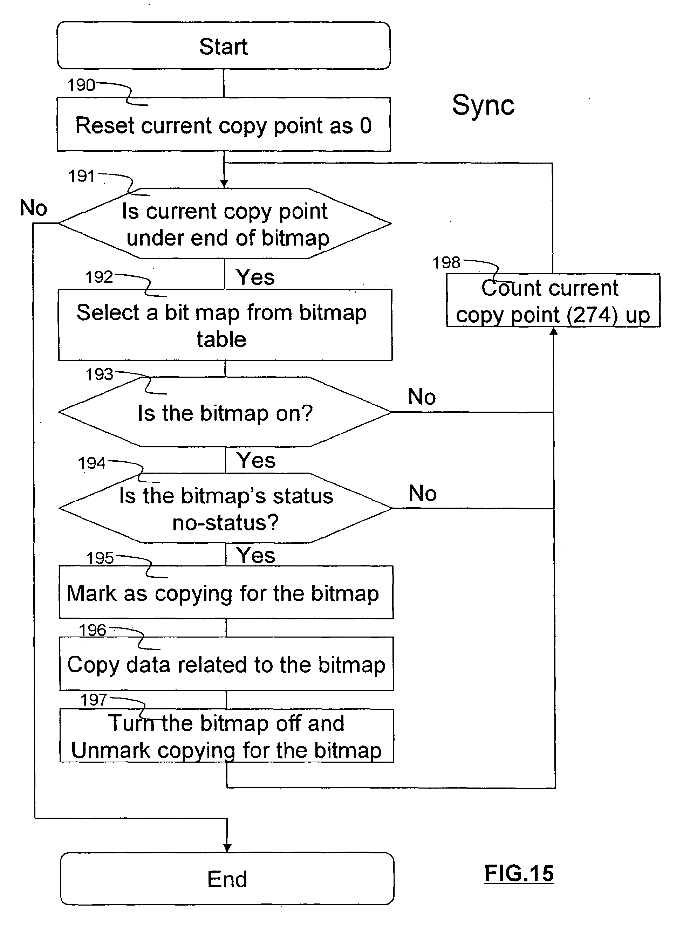

The storage administrator or system administrator operates the sync operation via GUI on console or Command Line Interface. In this example of sync operation, the mirror manager mirrors data on CDP config configured volumes like P-VOL, B-VOL, and JNL-VOL from the source to the target storage subsystem based-on defined pairs. The operation is described with reference to Fig.15. At step 190 the Mirror manager in the source storage subsystem resets current copy point to "0". At step 191 the Mirror manager checks whether the current copying point 274 in Fig. 9 is under end of bitmap or not. If yes, the procedure goes to Step 192; otherwise it ends. At step 192 the Mirror manager selects the current copying number's bitmap from bitmap table 270 in Fig 9. At step 193 the Mirror manager checks bitmap's flag 272. If the bitmap's flag is on, the procedure goes to Step 194. If the bitmap's flag is off, the procedure goes to Step 198. At step 194 the Mirror manager checks the status 273 for the specified bitmap. If the bitmap's status is "-" which is normal, the procedure goes to Step 195; otherwise the procedure goes to Step 198. At step 195 the Mirror manager marks as copying on bitmap's status 274 to indicate currently "copying" data on the segment to target LDEV's segment which is calculated by segment size times current copying number. At step 196 the Mirror manager copies data from the bitmap's specified LBA (Logical Block Address) and the segment size on source LDEV to one LBA and size on target LDEV. For example, bitmap number is 0 and the size of segment is 8K as one of examples. The start address of copying is 0. The size of copying data is 8K. At step 197 the Mirror manager turns the bitmap's flag off and mark status from "copying" status 273 to "-" as normal. At step 198 the Mirror manager counts up current copying point 274 which is stored in memory and is start from 0 to end of the bitmap number.

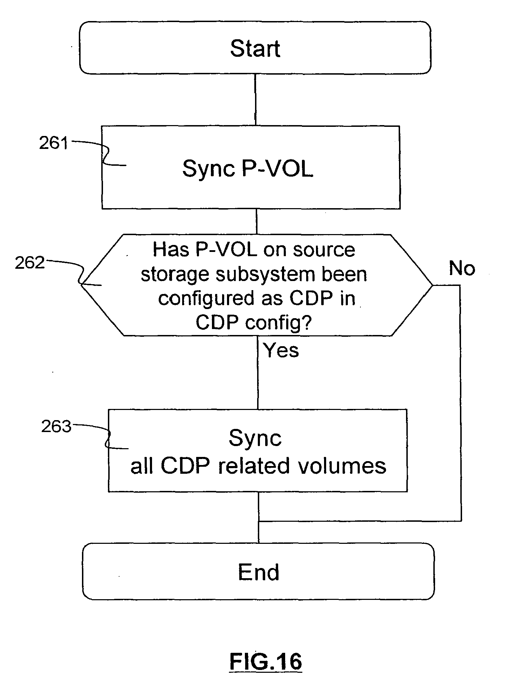

Regarding the sync operation procedure, the Mirror manager executes for pair defined P-VOL (Step 261 in Fig 16). If the Mirror manager finds the P-VOL is configured as CDP referring LDEV number of P-VOL from CDP Config 100 (Step 262 in Fig 16), the Mirror manager executes sync operation for B-VOL and JNL-VOL as well as P-VOL (Step 263 in Fig 16) based on pair list 140. If the P-VOL is not configured as CDP, the procedure ends.

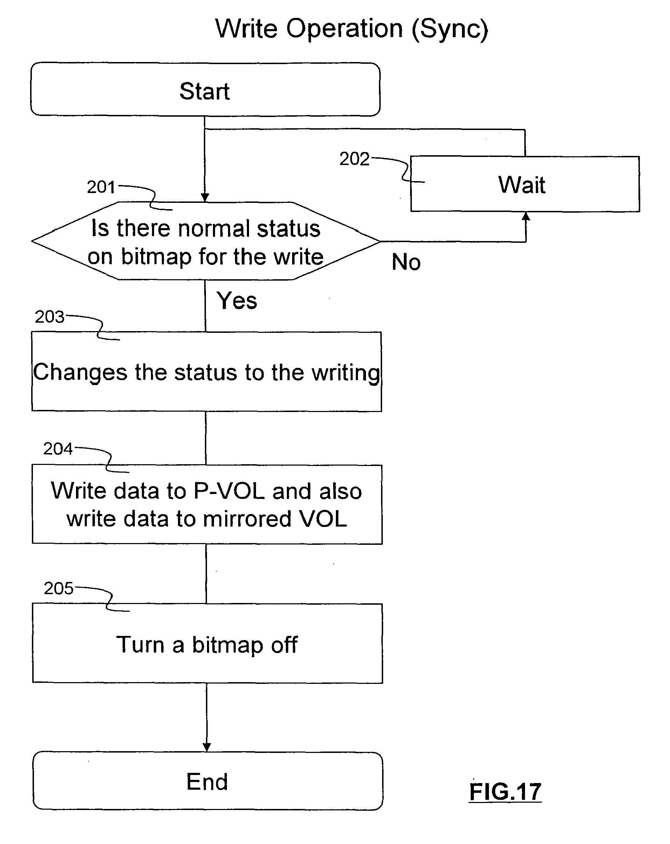

During sync operation, the JNL Manager changes to write operation instead of normal status operation (Fig .8). The procedure is as follows (Fig.17). At step 201 the JNL Manager checks whether the status on segments which include the write operation's access region from starting address to the addition of size on bitmap table is "normal" or not. If yes, the procedure goes to step 203; otherwise the procedure goes to step 202. At step 202 the JNL Manager waits for short period of time, e.g., a few milliseconds and then loops back to step 201. At step 203 the JNL Manager changes the status for the segment on bitmap table from "-" to "writing". At step 204 the JNL Manager writes data to P-VOL on the segment. If the segment keeps data as a fragment within the segment, the JNL manager reads the segment, modifies the data on the read data and write the modified data on P-VOL. The write data is also stored on the target LDEV which is specified by the pair table. At step 205 the JNL Manager changes the status for the segment on bitmap table from "writing" to "-".

During the write operation, the storage subsystem keeps write orders for P-VOL, B-VOL, JNL-VOL based on behavior (Fig.7); After split operation, CDP volumes can keep write order consistency among volumes. As can be understood, other sync procedures may be used and the procedures described herein are given only as one example. The end objective is to copy the data from the source volume to the target volume, with respect to a given point in time.

### 4. Split Operation

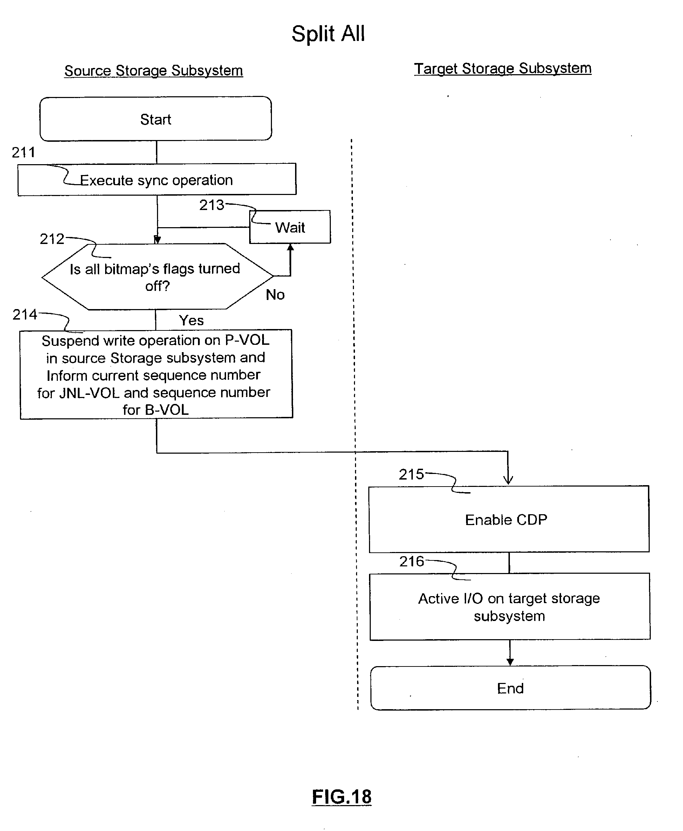

The split operation changes the location of data specified at a point-in-time by user. The operation is following (Fig.18). At step 211 the Mirror manager on the source storage subsystem executes the sync operation for the paired volumes. At step 212 the Mirror manager on the source storage subsystem checks whether all bitmap's flag 272 are turn off or not. If yes, the procedure on the source storage subsystem goes to Step 214; otherwise the procedure goes to Step 213. At step 213 the Mirror manager on the source storage subsystem waits for a few second and loops back to step 212. At step 214 the Mirror manager on the source storage subsystem suspends the JNL manager's write operation as R/O or DENY in LU-Path 90's access mode 96 on P-VOL in the source storage subsystem and informs the current sequence number of the JNL data on JNL-VOL to the Mirror manager on the target storage subsystem (3.a in Fig 12(A)). At step 215 the Mirror manager on the target storage subsystem enables CDP capability for paired P-VOL based on CDP config and the informed sequence number. At step 216 the Mirror manager activates I/Os as R/W in LU-Path 90's source storage subsystem on P-VOL in target storage subsystem (3.c in Fig 12(A)).

In this embodiment, we use bitmap mirroring capability to mirror data between storage subsystems. However, we may use other data copying methods, like journal type copy method such as Hitachi's Universal Replicator in order to transfer data under low latency network bandwidth. The journal type copy method has also the same sync for copying data and split for failover from a storage subsystem to another storage subsystem. This invention's control failover process (Step 214 and Step 216) for P-VOL and CDP related volumes from the source and target storage subsystems can be used for journal-type copying method as well.

### 5. Pair Deletion Operation

After migration, system or storage administrator may want to delete the relation of the pair under pair number. This operation deletes the record for the pair based on the pair number 141 in Fig 11 from the console or host's CLI I/F.

### Host's Behavior

In this embodiment, host 10 continues to perform normal operations during the migration. That is, after the storage maintainer creates the path connection between the source and target storage subsystems (Procedure 1, Fig. 12(A)) the host continues to run its applications on a volume in the source storage subsystem. The Administrator then executes the sync operation for the pair to initiate copying of the data (Procedure 2, Fig. 12(A)). During the copying operation HA's software can continue to execute IO operations on P-VOL 35. Once the Administrator executes a split operation for the pair (Procedure 3, Fig. 12(A)), HA's software detects that the volume in the source storage subsystem is inaccessible, based on SCSI's response (Proecedure 3.a in Fig 12 (A)) because The HA's software accesses to target P-VOL 337. During the split operation (3. in Fig 12(A)) OS waits to execute the next application's IO for the volume and any IO operations issued by the host 10 can be stored in buffer 39. The host's application software just can see a device name which is created by HA's software. HA software handles path failover from source P-VOL to target one on the device name. After the split operation, the OS can now direct the IO in the buffer 39 to the target storage volume. The Administrator may now delete the pair.

We use After-JNL as CDP in this embodiment. However we may apply this embodiment for Before-JNL's CDP which is journaling copy-on-write data on primary volume as journal management. In this configuration, JNL manager stores copy-on-write data for P-VOL in JNL and B-VOL is not used because B-VOL is shared by P-VOL. On sync operation, Mirror manager mirrors P-VOL and JNL-VOL similar to the case of After-JNL. On split operation, Mirror manager uses the same operation except transferring sequence number for B-VOL; Mirror manager informs current sequence number for JNL-VOL. Of course, regarding internal updates (Fig. 10(A)), JNL manager purges JNL data to low water mark.

As can be understood, the process of the first embodiment may be summarized in the following steps:
- a.: defining a target primary volume, a target baseline volume, and a target journal volume in the target storage subsystem, and pairing the target primary volume, target baseline volume, and target journal volume with the source primary volume, source baseline volume, and source journal volume, respectively;
- b.: performing a sync operation on the pairing of target primary volume and source primary volume, target baseline volume and source baseline volume, and target journal volume source journal volume;
- c.: performing a split operation of the source storage subsystem and target storage subsystem by:
i. suspending host I/O at the source subsystem's port;
ii. activating host I/O at the target storage subsystem; and
- d.: deleting the pairing of target primary volume and source primary volume, target baseline volume and source baseline volume, and target journal volume and source journal volume.

### Second Embodiment

The second embodiment of the invention is different from the first embodiment in that it utilizes a background mirror for the JNL-VOL and B-VOL on the source storage subsystem. The background mirror method helps the user to start it's business quickly by recording new IOs on the JNL VOL on the target storage subsystem. The difference of this embodiment from the first embodiment is in the management of the pairing and the mirror operations. We will mainly discuss these differences.

### Overview Configuration

Fig 12(B) illustrates an overview of a configuration according to an embodiment of the invention. In this configuration, there are P-VOL and B-VOL in the source and target storage subsystems. There are also two JNL-VOLs. An old JNL-VOL 161, which already has write IO data as journal from host 10, and a mirror old JNL-VOL 1201 in the target storage subsystem. In this embodiment there is also a new JNL-VOL 1202, which journals data taken after migration. Regarding the old JNL-VOL and B-VOL's data migration to target storage subsystem, the operation is executed in the background (4. Background mirror in Fig 12(B)). After the migration, the JNL manager applies all JNL data in the mirrored old JNL-VOL onto the B-VOL. The details of the migration operations according to the second embodiment are discuses below. The operation consist of creation of path configuration, pair creation and pair deletion the same as the first embodiment. Therefore, the discussion is only of the new sync operation, split operation, background mirroring and applying JNL data onto the B-VOL. 1. Sync

In the first embodiment, we executed Fig 16 to mirror all the data. Instead of this procedure, here mirror manager starts syncing P-VOL step (261). The Sync of all CDP related volumes step (263) can be performed independently. Notably, if P-VOL's syncing is faster than B-VOL and JNL-VOL, the user can eliminate IO impact on P-VOL during syncing operation. The step of syncing the remaining CDP related volumes can be done as discussed below with respect to the "Background mirror operation." In this second embodiment, after syncing all CDP related volumes (263), the JNL manager creates a new LDEV for new JNL-VOL having a size the same as the source JNL volume refereeing from Fig. 3 based on JNL LDEV's number. 2. Split

The procedure of split operation is as same as Fig 18; however, volumes applied on split are different. In the first embodiment, the volume was all volumes P-VOL, B-VOL, and JNL-VOL. In this second embodiment the split is only on the P-VOL. After the sync operation for P-VOL and the split, JNL manager in source storage subsystem informs the latest sequence number for JNL manager (3.b in Fig 12(B)) to journal manager in target storage subsystem. Then JNL starts to journal new IO starting from the next informed sequence number onto the New JNL-VOL 1269. During the sync operation, the JNL manager suspends applying any data from New JNL-VOL 1269 onto the B-VOL. Regarding sync and split operation for JNL-VOL and B-VOL, we use the same operation as in Fig 15.

### 3. Background mirror operation

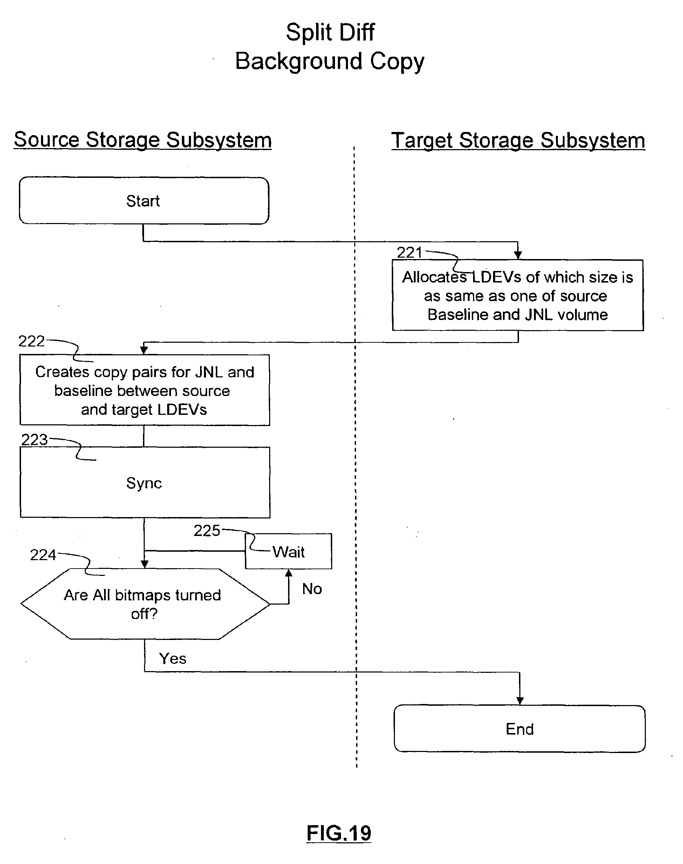

Mirror manager process background mirror for CDP related volumes B-VOL and JNL-VOL. The process is following (Fig.19). In step 221 the Mirror manager on the target storage subsystem allocates new LDEVs, the size of which is the as same as one of the source B-VOL and JNL-VOL from the free LDEV pool 111. The size of LDEVs is referred from Size 88 in Fig. 3, based on B-VOL and JNL-VOL's LDEV number in source's CDP Config 100. In step 222 the Mirror manager creates mirror pair entries for JNL-VOL and B-VOL on the source and target storage subsystem and registers it on table 140 (Fig 11). For example, source P-VOL's B-VOL's, JNL-VOL's LDEVs are 1, 100, and 201. Allocated P-VOL's, B-VOL's, old JNL-VOL's LDEVs are 1001, 1100, and 1201. In table 140, the pairs are 1 to 100 for P-VOL, 100 to 1100 for B-VOL, and 201 to 1201 for old JNL-VOL. In step 223 the Sync executes for paired B-VOL and JNL-VOL. In step 224 the Mirror manager on the source storage subsystem checks whether all bitmap's flag 272 are turn off or not. If yes, the procedure on the source storage subsystem goes to Step 225; otherwise, the procedure ends. In step 225 the Mirror manager on the source storage subsystem waits for a period of time and then loops back to step 224. 4. Applying JNL data onto B-VOL

After the migration, the JNL manager needs to consolidate the JNL volume to work at normal JNL size. The procedure is that JNL manager apply all old JNL-VOL1261 data onto the B-VOL, and then returns the old JNL-VOL's LDEV to LDEV pool. After the return of LDEV, CDP uses normal applying JNL data operation onto New JNL 1269 (Fig 10(A)). During the sync and split operation, the JNL manager suspends this operation.

As can be understood, the process of the second embodiment may be summarized in the following steps:
- a.: defining a target primary volume, a target baseline volume, and a target journal volume in the target storage subsystem, and pairing the target primary volume, target baseline volume, and target journal volume with the source primary volume, source baseline volume, and source journal volume, respectively;
- b.: performing a sync operation on the pairing of target primary volume and source primary volume;
- c.: noting a last sequence number recorded in the source journal volume and from that point forward, directing all host I/O to target storage subsystem by performing host I/O requests on the target primary volume and recording journal entries of the host I/O requests on the target journal volume;
- d.: Asynchronously copying the source baseline volume onto the target baseline volume and the source journal volume onto the target journal volume to thereby define an old journal in said target journal volume;
- e.: deleting the pairing of target primary volume and source primary volume, target baseline volume and source baseline volume, and target journal volume and source journal volume.

### Third Embodiment

The third embodiment relies on monitoring the used capacity of JNL data on the target storage subsystem with respect to the total size of the source JNL volume. This monitoring takes place after the P-VOL is mirrored. The benefit is that the user doesn't need to mirror the source baseline or source JNL volumes to the target storage subsystem.

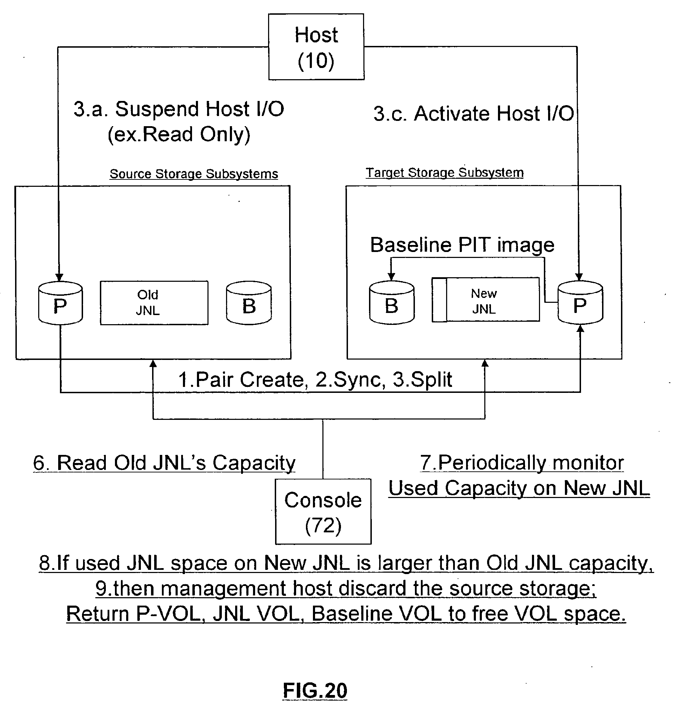

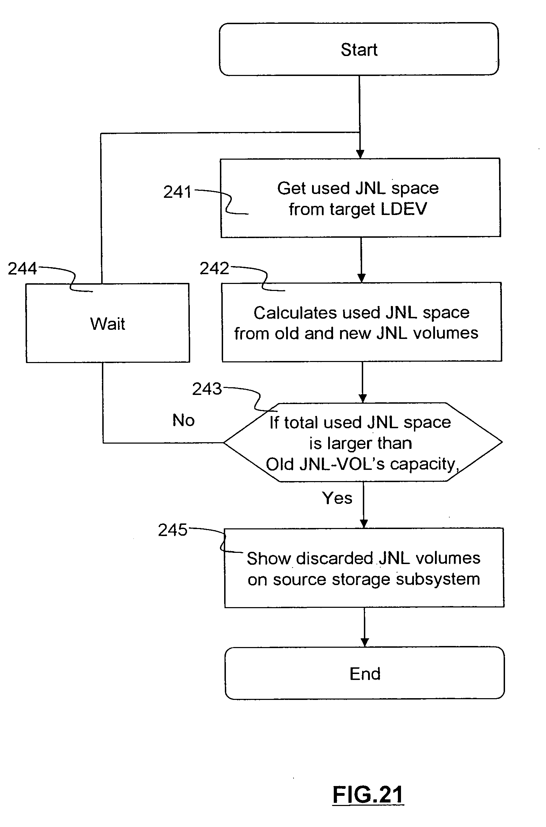

In this embodiment, we use the same components as in the first embodiment. We will discus only the differences with respect to the first embodiment. Fig. 20 illustrates an overview of the system according to the third embodiment of the invention. In this configuration, the Mirror manager migrates data of the P-VOL to the target storage subsystem (Procedure 1, 2, 3a, 3c in Fig 20); but doesn't migrate the B-VOL and the JNL-VOL. Rather, a copy of the mirrored P-VOL is stored in the target B-VOL as a point-in-time baseline image of the P-VOL. Then, the P-VOL in the target storage subsystem starts the CDP process using the process of Fig. 7. Console 72 monitors the length of the old and new JNL to manage the length of the JNL data between the old JNL in the source subsystem and the new JNL in the target storage subsystem (Procedure 6, 7, 8, 9 in Fig 20). Fig. 21 shows the monitoring procedure in console 72. The monitoring procedure starts after the migration of the P-VOL. Initially the console's monitor module which is run on the console (not depicted) reads the size of used JNL data in the source storage subsystem and the capacity size of the JNL-VOL (Procedure 6 in Fig 20). In step 241 the Console's monitor module gets the size of used JNL space from LDEV in the target storage subsystem (Procedure 7 in Fig 20). In step 242 the Console's monitor calculates the total size of used JNL on the old and new JNL-VOL (size of used JNL data in source + size of used JNL data in target). In step 243 the Console's monitor checks whether a total size of used new JNL space is below old JNL-VOL's capacity. If yes, the procedure goes to Step 244; wherein the monitor waits for user defined period, e.g., one or more hours, and then loops back to step 241. Otherwise, the procedure goes to Step 245 (Procedure 8 in Fig 20). In step 245 the Console's monitor informs of pending release of JNL-VOL's LDEV on source storage subsystem to the users via e-mail, SNMP, pager, etc. In this process, if the user accepts, the console's monitor requests to return the JNL-VOL's LDEV to free LDEV pool. After the return, the Console's monitor finishes to monitor the JNL-VOL (Procedure 9 in Fig 20). Thus, the source volumes are released to be used for other storage purposes or may be released by physically disconnecting them form the host system.

This embodiment uses capacity to expire the data on source storage subsystem. As another method, the retention term which is from start of journal to end of one referring of JNL head/footer information can be used.

As can be understood, when the used capacity on the new JNL volume on the target storage subsystem exceeds that of the old JNL volume on the source storage subsystem, the user's policy may allow discarding the data in the old JNL volume of the source storage subsystem. Under such a policy, recovery can be made from the entries in the new JNL volume, but not from the old JNL volume. However, a user can restore a PIT data from source JNL volume when the JNL data on source volume exists. In this situation, user, corporate auditor or other wants to be audit for a past time of data. The process of this embodiment may be summarized in the following steps:
- a.: defining a target primary volume, a target baseline volume, and new journal volume in the target storage subsystem, and pairing the target primary volume, target baseline volume, and new journal volume with the source primary volume, source baseline volume, and source journal volume, respectively;
- b.: performing a sync operation on the pairing of target primary volume and source primary volume;
- c.: Making a point-in-time image of the target primary volume onto the target baseline volume;
- d.: suspending host I/O requests on the source storage subsystem port;
- e.: activating host I/O requests on the target storage subsystem port;
- f.: monitoring used storage space on the new journal volume and, when the used storage space on the new journal volume exceeds source journal capacity, providing an indication, such as issuing an alarm to the user, that the source storage subsystem may be released.

### Fourth Embodiment

According to a fourth embodiment of the invention, a storage virtualization hardware, like Hitachi's TagmaStore Universal Storage Platform, is used. In this system, the storage disk is an external storage disk, in contrast to the internal disk depicted in the embodiment of Figure 2. We will discus the differences from the first, second, and third embodiment.

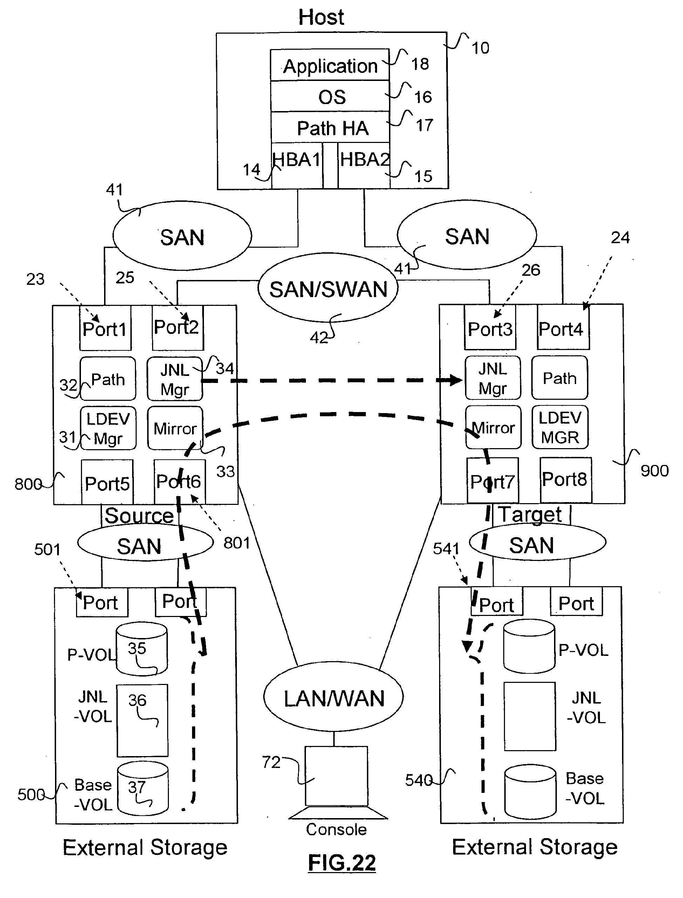

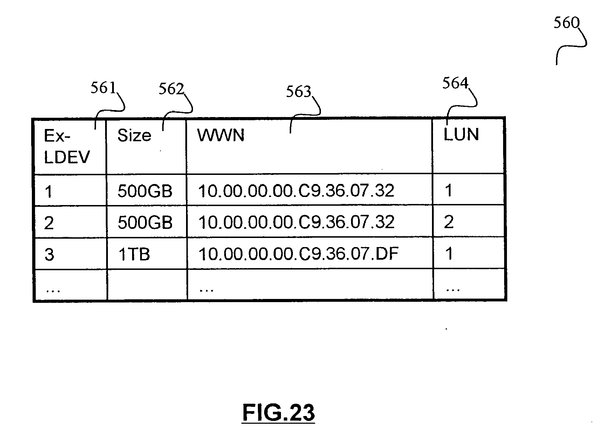

Fig 22 illustrates a logical configuration of the forth embodiment, which utilizes an external storage arrangement. In this configuration, storage virtualization hardware 800, 900 has the same capability as storage subsystem 20, 40 in Fig 2. The user can use the storage space for P-VOL, JNL-VOL, and B-VOL on the storage virtualization hardware's disc (Not depicted) or external storage subsystem 500 and 540. To use an external storage's storing area like LU, Storage virtualization hardware 800 has external storage mapping table (Fig. 23). When the virtualization hardware initiates LUs on external storage 500 through Port 801 as initiator, it registers Ex-LDEV number as identifier of virtualization hardware's LDEV(561), the size for the LU(562), WWN for external storage subsystem (563), and then LUN (564) on the external storage subsystem. The LDEV Manager can use the registered Ex-LDEV number as LDEV 91 in Fig 4. The external storage subsystem provides normal LU which consists of LDEV and RAID configured disk like the storage subsystem 20, 40. Other capabilities, that is, software capabilities like JNL manager, Mirror manager, and other are as same as for the first, second, and third embodiments.

As can be understood, the process of the previous embodiments described herein can be applied to this embodiment by using the external storage mapping table for the devices. As an example, the process of the first embodiment can be adopted to operate in this environment by executing the following steps:
- a.: defining a target primary volume, a target baseline volume, and a target journal volume in said target storage subsystem and constructing an external storage mapping table;
- b.: pairing the target primary volume, target baseline volume, and target journal volume with the source primary volume, source baseline volume, and source journal volume, respectively;
- c.: performing a sync operation on the pairing of target primary volume and source primary volume, target baseline volume and source baseline volume, and target journal volume source journal volume;
- d.: performing a split operation of the source storage subsystem and target storage subsystem by:
i. suspending host I/O at the source subsystem's port;
ii. activating host I/O at the target storage subsystem; and
- e.: deleting the pairing of target primary volume and source primary volume, target baseline volume and source baseline volume, and target journal volume and source journal volume.

### 5. Fifth Embodiment

This embodiment also uses intelligent switch hardware, like CISCO MDS 9000 (http://www.cisco.com/en/US/products/hw/ps4159/ps4358/index.html) to run CDP. We will discus the difference between this and the forth embodiment.

Fig 22 shows the logical configuration. In this configuration, the user can use the storage space for P-VOL, JNL-VOL, and B-VOL on external storage subsystems 500 and 540. In this embodiment the intelligent switch doesn't have enough cache. The port has small memory area just to buffer FC's frames which has SCSI commands to mirror the frames in Mirror manager 33. To process the received command, intelligent switch processes it on controller processors. The control processor has enough memory to process JNL manager 34. The controller process may be located in internal switch or externally, like PC connected by fibre channel. As reference hardware configuration for external control, one may use the hardware configuration, referred to as SANTap-based Connectivity for Kashya Data Replication Service, designed for Cisco 9000 series SANTap service, of Cisco Systems of San Jose, California. The architecture is depicted in Figure 1 of a White Paper available for download at the following URL.
(http://www.cisco.com/en/US/netsol/ns515/networking solutions white paper0900aecd 802d3f67.shtml). Other capabilities process which is software capabilities like JNL manager, Mirror manager and other are as same as one of forth embodiment.

### 6. Sixth Embodiment

This embodiment uses software based CDP in the host 10. In this case, the logical device name is not available to the host. Instead, a table is used to indicate device name, device identifier, host bus adapter, world-wide name, and logical units, as will be described below. We will discus the difference from the first, second, and third embodiment.

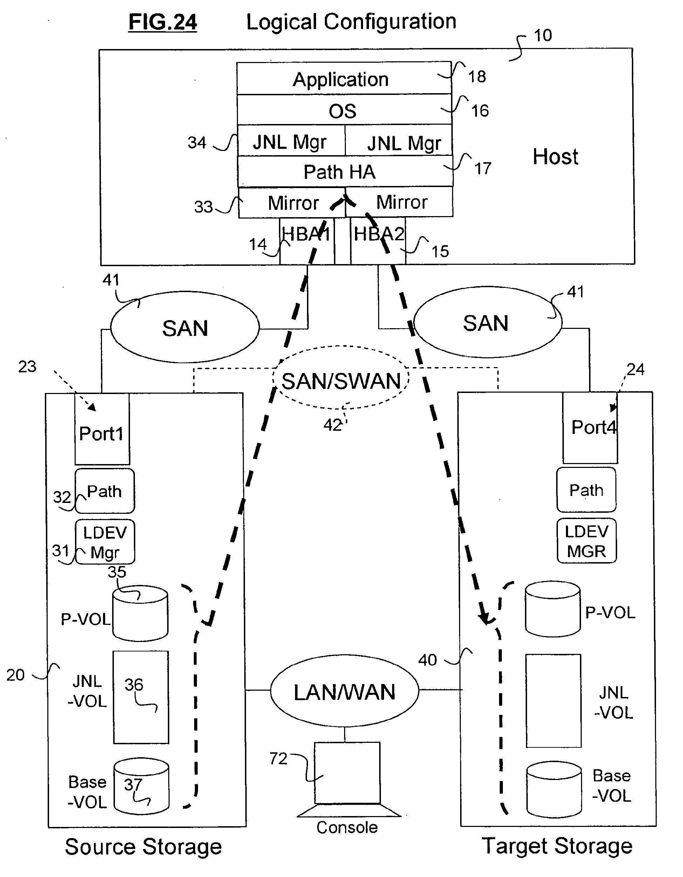

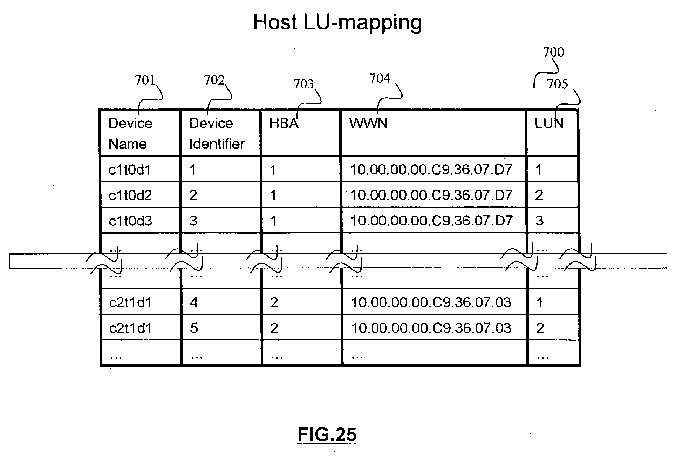

Fig 24 shows the logical configuration. The first difference is the identification of the LDEV, since the LDEV name is not available to the host. The first to third embodiments use LDEV number within the storage subsystems, since the CDP operation is done from the storage subsystems. This embodiment consolidates the mapping table within the host, since in this embodiment the CDP operation is done from the host. Fig. 25 shows device table within the host, created by the OS. The mapping table includes device name 701 within the OS, and the device-connected HBA's number that will be number on "c" parameter on device name 701, the HBA's WWN 704 from storage subsystem and the LUN 705 from storage subsystem, that will be number on "d" parameter on device name 701. The OS creates the table on a discovery operation for SAN's target port and LUN. Also there is device identifier 702. Generally, the host OS mainly uses device name as device identifier. This embodiment uses this identifier to emulate the same situation as the storage subsystem's LDEV in first to third embodiment; Therefore instead of LDEV number, this device identifier number use volume identifier within the OS.

Host 10 runs JNL managers 34 and Mirror managers 33 as well. The JNL managers may become a single manager. Also Mirror manager may become a single manager. In this embodiment, we show the separated modules to match with first to third embodiment. Also the JNL manager and Mirror manager's related tables like CDP config 100, bitmap table 270, pair table 11 is also moved to host 10. Due to moving the JNL manager or Mirror manager to the host side, the connection 42 between storage subsystems is unnecessary. Instead of the connection 41, this embodiment uses the process's communication between modules.

The storage subsystem 20, 40 provides normal LU which consists of LDEV and RAID. The host provides GUI operation for journal and mirror manager instead of console 72. This embodiment moves the GUI operation for journal manager and mirror manager from console 41 to host's GUI.

The next discussion relates to the difference in procedures. Unlike the prior embodiments, this embodiment uses device identifier instead of LDEVs. In the first to third embodiment, LDEV is unique within the storage subsystem. To adopt first to third embodiment to this embodiment, we need to combine the identifiers for the storage subsystems. In this embodiment, the device identifier is unique identifier within the OS. In first-to-third embodiments of the invention, we have considered LDEV number uniquely within storage subsystems. In this embodiment, instead of LDEV number, we can use system identifier in all procedures. Also serial number for storage subsystem become target number on "t" parameter in device name 701. The device name manages the storage identifier. This embodiment doesn't need serial number concept and path connection procedure 170 in Fig 13. Under Mirror and JNL managers, the port and LU concept for P-VOL are used. In this embodiment, we don't use this identifier. Instead of this, we also use the device identifier 702. Other procedures in first to third embodiment can be applicable with this invention considering above points.

As shown in Figure 24, the migration is controlled by the Host, and data transfer is done through the host, as is shown by the broken-line arrow. However, as is shown in broken line, optionally the source and the target storage subsystems may be connected via SAN 42, in which case the host still controls the migration, but volume data transfer is done via SAN 42.

Finally, it should be understood that processes and techniques described herein are not inherently related to any particular apparatus and may be implemented by any suitable combination of components. Further, various types of general purpose devices may be used in accordance with the teachings described herein. It may also prove advantageous to construct specialized apparatus to perform the method steps described herein. The present invention has been described in relation to particular examples, which are intended in all respects to be illustrative rather than restrictive. Those skilled in the art will appreciate that many different combinations of hardware, software, and firmware will be suitable for practicing the present invention. For example, the described software may be implemented in a wide variety of programming or scripting languages, such as Assembler, C/C++, perl, shell, PHP, Java, etc.

Moreover, other implementations of the invention will be apparent to those skilled in the art from consideration of the specification and practice of the invention disclosed herein. Various aspects and/or components of the described embodiments may be used singly or in any combination in the computerized storage system with data replication functionality. It is intended that the specification and examples be considered as exemplary only, with a true scope and spirit of the invention being indicated by the following claims.

## Claims

1. A method for migrating a continuous data protection (CDP) volumes from a source storage subsystem to a target storage subsystem coupled to a host, wherein the CDP volumes comprise a source primary volume, a source baseline volume, and a source journal volume, the method comprising the sequential steps of:
a. defining a target primary volume, a target baseline volume, and a target journal volume in said target storage subsystem, and pairing the target primary volume, target baseline volume, and target journal volume with the source primary volume, source baseline volume, and source journal volume, respectively;
b. performing a sync operation on the pairing of target primary volume and source primary volume, target baseline volume and source baseline volume, and target journal volume source journal volume;
c. performing a split operation of the source storage subsystem and target storage subsystem by:
i. suspending host I/O at the source subsystem's port;
ii. activating host I/O at the target storage subsystem; and
d. deleting the pairing of target primary volume and source primary volume, target baseline volume and source baseline volume, and target journal volume and source journal volume.

2. The method of claim 1, further comprising the step:
e. releasing the source storage subsystem to a free device pool.

3. The method of claim 1 or claim 2, wherein the pairing comprises generating a pairing table, said table comprising for each pair number, for the source storage subsystem and for the target storage subsystem:
storage subsystem serial number;
port number;
logical unit number; and
logical device number.

4. The method of any one of claims 1 to 3, wherein during the step of suspending host I/O, any I/O requests of host application is buffered, and is sent to the target storage subsystem after the step of activating host I/O at the target storage subsystem.

5. The method of any one of claims 1 to 4, wherein the step of defining comprises generating a mapping table to map external logic devices to logical units.

6. The method of claim 5, wherein the mapping table comprises entry fields for external logical device number, external logical device size, worldwide name, and logical unit number.

7. The method of any one of claims 1 to 6, further comprising a preparatory step of creating a parity group table, said parity group table having field entries comprising: parity group number, parity group size, RAID number, disk number, logical device number, start logical block address, end logical block address, and size of logical device.

8. The method of any one of claims 1 to 7, further comprising a preparatory step of creating a port mapping table having field entries comprising: port number, worldwide name for the port, logical unit number, and logical device number.

9. The method of claim 8, wherein the port mapping table further comprises filed entries of logical device mode and virtual logical unit indicator.

10. The method of any one of claims 1 to 9, further comprising a preparatory step of creating a resource pool table having field entries comprising: free logical device number and used logical device number.

11. A method for migrating a continuous data protection (CDP) volumes from a source storage subsystem to a target storage subsystem coupled to a host, wherein the CDP volumes comprise a source primary volume, a source baseline volume, and a source journal volume, the method comprising the sequential steps of:
a. defining a target primary volume, a target baseline volume, and a target journal volume in said target storage subsystem, and pairing the target primary volume, target baseline volume, and target journal volume with the source primary volume, source baseline volume, and source journal volume, respectively;
b. performing a sync operation on the pairing of target primary volume and source primary volume;
c. noting a last sequence number recorded in the source journal volume and for that point forward, directing all host I/O to target storage subsystem by performing host I/O requests on the target primary volume and recording journal entries of the host I/O requests on the target journal volume;
d. Asynchronously copying the source baseline volume onto the target baseline volume;
e. Asynchronously copying the source journal volume onto the target journal volume to thereby define an old journal in said target journal volume; and,
f. deleting the pairing of target primary volume and source primary volume, target baseline volume and source baseline volume, and target journal volume and source journal volume.

12. The method of claim 11, further comprising performing after step e, the step:
d.i. applying the old journal to the target baseline volume.

13. The method of claim 11 or claim 12, wherein the step of defining comprises generating a mapping table to map external logic devices to logical units.

14. The method of claim 13, wherein the mapping table comprises entry fields for external logical device number, external logical device size, worldwide name, and logical unit number.

15. The method of any one of claims 11 to 14, further comprising the step:
g. releasing the source storage subsystem to a free device pool.

16. The method of any one of claims 11 to 15, wherein the pairing comprises generating a pairing table, said table comprising for each pair number, for the source storage subsystem and for the target storage subsystem:
storage subsystem serial number;
port number;
logical unit number; and
logical device number.

17. The method of any one of claims 11 to 16, further comprising a preparatory step of creating a parity group table, said parity group table having field entries comprising: parity group number, parity group size, RAID number, disk number, logical device number, start logical block address, end logical block address, and size of logical device.

18. The method of any one of claims 11 to 17, further comprising a preparatory step of creating a port mapping table having field entries comprising: port number, worldwide name for the port, logical unit number, and logical device number.

19. The method of claim 18, wherein the port mapping table further comprises filed entries of logical device mode and virtual logical unit indicator.

20. The method of any one of claims 11 to 19, further comprising a preparatory step of creating a resource pool table having field entries comprising: free logical device number and used logical device number.

21. A method for migrating a continuous data protection (CDP) volumes from a source storage subsystem to a target storage subsystem coupled to a host, wherein the CDP volumes comprise a source primary volume, a source baseline volume, and a source journal volume, the method comprising the sequential steps:
a. defining a target primary volume, a target baseline volume, and new journal volume in the target storage subsystem, and pairing the target primary volume, target baseline volume, and new journal volume with the source primary volume, source baseline volume, and source journal volume, respectively;
b. performing a sync operation on the pairing of target primary volume and source primary volume;
c. Making a point-in-time image of the target primary volume onto the target baseline volume;
d. suspending host I/O requests on the source storage subsystem port;
e. activating host I/O requests on the target storage subsystem port;
f. monitoring used storage space on the new journal volume and, when the used storage space on the new journal volume exceeds source journal capacity, providing an indication that the source storage subsystem may be released.

22. The method of claim 21, wherein the step of providing an indication comprises issuing an alarm to the user.

23. The method of claim 21 or claim 22, further comprising the step of:
g. releasing the source storage subsystem from CDP operations.

24. The method of any one of claims 21 to 23, further comprising the step of:
f. releasing the source storage subsystem to free storage device pool.

25. The method of any one of claims 21 to 24, wherein the step of defining comprises generating a mapping table to map external logic devices to logical units.

26. The method of claim 25, wherein the mapping table comprises entry fields for external logical device number, external logical device size, worldwide name, and logical unit number.

27. The method of any one of claims 21 to 26, further comprising a preparatory step of creating a parity group table, said parity group table having field entries comprising: parity group number, parity group size, RAID number, disk number, logical device number, start logical block address, end logical block address, and size of logical device.

28. The method of any one of claims 21 to 27, further comprising a preparatory step of creating a port mapping table having field entries comprising: port number, worldwide name for the port, logical unit number, and logical device number.

29. The method of claim 28, wherein the port mapping table further comprises filed entries of logical device mode and virtual logical unit indicator.

30. The method of any one of claims 21 to 29, further comprising a preparatory step of creating a resource pool table having field entries comprising: free logical device number and used logical device number.
